# EUROPÄISCHE PATENTSCHRIFT

(11) **EP 0 419 698 B1**
(45) Veröffentlichungstag und Bekanntmachung des Hinweises auf die Patenterteilung: **09.02.1994**
(21) Anmeldenummer: 89117786.7
(22) Anmeldetag: 26.09.1989
(51) Int. Cl.: G06F 1/00, G06F 1/16

(54) **Elektronisches Gerät mit einer abnehmbaren Bearbeitungseinheit**
Electronic apparatus with a removable operator's unit
Appareil électronique avec une unité de travail détachable

(43) Veröffentlichungstag der Anmeldung: 03.04.1991
(73) Patentinhaber: SIEMENS AKTIENGESELLSCHAFT, 80333 München (DE)
(72) Erfinder: Bachträgl, Franz, D-8520 Erlangen (DE); Lentz, Eberhard, Dipl.-Designer, D-8555 Adelsdorf (DE)

(56) Entgegenhaltungen:
- DE-U- 8 803 327
- GB-A- 2 150 726
- US-A- 4 718 740

## Beschreibung

Die Erfindung bezieht sich auf ein elektronisches Gerät in einem Gehäuse mit einer abnehmbaren Tastaturkonsole, die über ein Kabel mit dem Gerät verbindbar ist.

Ein derartiges elektronisches Gerät ist aus der Zeitschrift "Energie und Automation" 11, 1989, Heft 2, Seiten 22 bis 24, und aus dem Sonderdruck "SIMATIC S5 PG 750 - Das Programmiergerät für alle SPS", Bestell-Nr. A19100-E812-B597, bekannt.

Derartige transportable Geräte werden häufig zu Prüf- oder Programmierzwecken vor Ort an speicherprogrammierbaren Steuerungen oder im technischen Büro eingesetzt. Deshalb werden diese transportablen Geräte auch tragbare Programmiergeräte ("Portables") oder auch tragbare Servicegeräte genannt. Derartige Geräte verfügen über einen Bildschirm und eine Tastaturkonsole, die eine alphanumerische Tastatur mit zusätzlichen Funktionstasten enthält. Außerdem verfügen diese Geräte über einen Prozessor, einen Arbeitsspeicher, eine Farbgrafikanschaltung, ein Diskettenlaufwerk sowie über ein Festplattenlaufwerk. Ferner verfügen diese Geräte über eine serielle Schnittstelle, eine sogenannte ARCNET-Schnittstelle für den schnellen Datenaustausch, eine sogenannte Centronics-Schnittstelle für parallele Drucker und eine Ethernet-Anschaltung. Die Tastaturkonsole kann räumlich getrennt von dem eigentlichen Gerät verwendet werden, mit welchem es mittels eines Kabels verbunden ist. Durch die Anbringung der Tastaturkonsole an das Gerät, beispielsweise gemäß der DE 29 38 197 Al, kann das Gerät wahlweise stehend als Standgerät mit waagerechtem Bildschirm oder liegend als Tischgerät mit annähernd senkrechtem Bildschirm verwendet werden. Ferner kann bei Einsatz eines externen Monitors das Gerät auch unter einem Tisch plaziert werden.

Der Anwender, der ein derartiges Gerät vor Ort an einer Maschine oder in einem technischen Büro benutzt, arbeitet somit an einem Bildschirmarbeitsplatz. Da solche Geräte als Kompaktgeräte konzipiert sind, an denen man einen eng begrenzten Arbeitsablauf durchführt, ist an eine ergonomische Ausgestaltung dieses Bildschirmarbeitsplatzes kaum gedacht worden und auch nicht unbedingt notwendig. Jedoch durch die Leistungssteigerung dieses Gerätes kommt der Benutzer in den großen Anwendungsbereich von Personalcomputer, wodurch der Arbeitsablauf nicht mehr eng begrenzt ist.

Der Erfindung liegt nun die Aufgabe zugrunde, ein derartiges Geräte so auszubilden, daß es orts- und anwendungsbedingt in möglichst vielen Lagen einen ergonomischen Arbeitsplatz bildet.

Diese Aufgabe wird erfindungsgemäß dadurch gelöst, daß die Tastaturkonsole mit einem schwenkbaren, einrastbaren Flachbildschirm eine abnehmbare Bearbeitungseinheit bildet, daß eine Stirnfläche des Gehäuses derart geneigt ist, daß diese Stirnfläche mit der Bodenfläche des Gehäuses einen spitzen Winkel einschließt, wodurch ein Stauraum entsteht, daß diese geneigte Stirnfläche mittig mit einer den Flachbildschirm aufnehmenden Vertiefung, mit einem Anschlußschacht zur Aufnahme des Anschlußsteckers der abnehmbaren Bearbeitungseinheit und mit zwei die Bearbeitungseinheit aufnehmenden, gabelförmigen Vorrichtungen versehen ist und daß die Bearbeitungseinheit mit einer zu den gabelförmigen Vorrichtungen korrespondierenden Arretierungsvorrichtung versehen ist.

Durch die Verbindung der Tastaturkonsole mit einem Flachbildschirm zu einer Bearbeitungseinheit ist nicht nur die Tastaturkonsole vom Gerät räumlich getrennt einsetzbar, sondern auch der Bildschirm. Für eine ergonomische Arbeitsplatzgestaltung muß der Bildschirm frei auf einem Tisch aufstellbar sein. Dadurch kann es bei verschiedenen Arbeitsabläufen an dem jeweils günstigsten Platz positioniert werden. Besonders vorteilhaft ist, daß das elektronische Gerät im Gehäuse nicht unmittelbar in der Nähe der abnehmbaren Bearbeitungseinheit aufgestellt werden muß, da die Bearbeitungseinheit mit dem Gerät mittels eines Kabels verbunden ist. D.h., man kann das Gerät unter den Tisch stellen und benötigt zur Bearbeitung verschiedener Arbeitsvorgänge keinen externen Monitor mehr.

Da der Flachbildschirm schwenkbar und einrastbar mit der Tastaturkonsole zu einer Bearbeitungseinheit verbunden ist, besteht für jeden Benutzer, unabhängig von seiner Statur, die Möglichkeit, den Bildschirm so zur Tastaturkonsole einzustellen, daß ein optimaler Beobachtungswinkel entsteht. Diese Einstellung des Flachbildschirms ist möglich, bei der Verwendung des Gerätes als Tischgerät oder als Standgerät. Besonders bei der Verwendung als Standgerät ist der schwenkbare Flachbildschirm von Vorteil, da nun nicht mehr der Bildschirm und die Tastaturkonsole in einer Ebene angeordnet sind, sondern der Bildschirm zur Tastaturkonsole vom Benutzer frei einstellbar ist.

Bei der Benutzung der Bearbeitungseinheit räumlich getrennt vom Gerät stützt sich die Bearbeitungseinheit auf eine vordere Kante der Tastaturkonsole und auf eine hintere, untere abgerundete Kante des Gehäuses des Flachbildschirms ab. Dadurch ist die Tastaturkonsole geneigt angeordnet. Durch Schwenken des Flachbildschirms, d.h., die Veränderung des Winkels, der vom Flachbildschirm und der Tastaturkonsole eingeschlossen wird, ändert sich auch die Neigung der Tastaturkonsole, die zwischen 0° und 15° liegt. Diese Neidungsänderung der Tastaturkonsole durch Schwenken des Flachbildschirms wird dadurch erreicht, daß das Gehäuse des Flachbildschirms als hohes Gelenkband-Profil als Innenhälfte des Gelenks und die Tastaturkonsole als niedriges Gelenkband-Profil als Außenhälfte des Gelenks ausgestaltet sind. Diese beiden Gelenkhälften sind mittels einer Welle miteinander verbunden, wobei die Außenhälfte des Gelenks axial auf der Welle fixiert ist.

Durch die Ausgestaltung der gabelförmigen Vorrichtungen zur Aufnahme der Bearbeitungseinheit stellt sich bei der Verwendung als Tischgerät eine für eine ergonomische Arbeitsplatzgestaltung notwendige Neigung der Tastaturkonsole ein, wobei jeder Benutzer den Flachbildschirm, bedingt durch seine Körperstatur, mehr oder weniger aus der Vertiefung der Stirnfläche des Gerätes herausschwenken kann. Bei der Verwendung des Gerätes als Standgerät ist die Bearbeitungseinheit in die gabelförmige Vorrichtung eingehängt und stützt sich auf diese Vorrichtung ab.

Die Neigung der Stirnfläche, d.h. der Winkelwert des spitzen Winkels, der von der geneigten Stirnfläche und der Bodenfläche des Gehäuses gebildet wird, hängt von der Breite der Tastaturkonsole ab, da die Tastaturkonsole als Abdeckung der Stirnfläche, insbesondere des Flachbildschirms, dient. Durch die Neigung der Stirnfläche kann die Höhe des Gehäuses trotz der Verwendung der in seinen Abmessungen nicht frei wählbaren Tastaturkonsole verkleinert werden, ohne dabei das Gehäuse zu sehr zu strecken. Außerdem entsteht durch die geneigte Stirnfläche im Gehäuse ein Stauraum, der von der Elektronik des Gerätes nicht benutzt wird.

Somit kann man durch die Ausgestaltung der abnehmbaren Bearbeitungseinheit das Gerät in vielen orts- und anwendungsbedingten Lagen benutzen, wobei auf eine ergonomische Arbeitsplatzgestaltung nicht mehr verzichtet werden muß.

In einer vorteilhaften Ausgestaltung des Gerätes ist im Stauraum ein einen Drucker aufnehmender, quaderförmiger Hohlkörper angeordnet, der von einer Seitenfläche des Gerätes zugänglich ist. Außerdem ist im Stauraum ein Zubehörfach angeordnet, das von der Bodenfläche des Gerätes zugänglich ist. Durch diese vorteilhafte Ausgestaltung des Gerätes hat der Benutzer des Gerätes, der beispielsweise auf Service-Einsatz geht, alle notwendigen Zubehörteile im Gerät verstaut, wodurch beispielsweise ein Kabel nicht mehr vergessen werden kann.

Zur weiteren Erläuterung der Erfindung wird auf die Zeichnung Bezug genommen, in der ein Ausführungsbeispiel des erfindungsgemäßen elektronischen Gerätes schematisch veranschaulicht ist.
- Figur 1: zeigt einen Längsschnitt des elektronischen Gerätes, in
- Figur 2: ist eine perspektivische Frontansicht des Gerätes als Tischgerät mit räumlich getrennter Bearbeitungseinheit dargestellt,
- Figur 3: veranschaulicht das Gerät als Standgerät und in
- Figur 4: ist eine Ausführungsform der abnehmbaren Bearbeitungseinheit des Gerätes in Seitenansicht dargestellt.

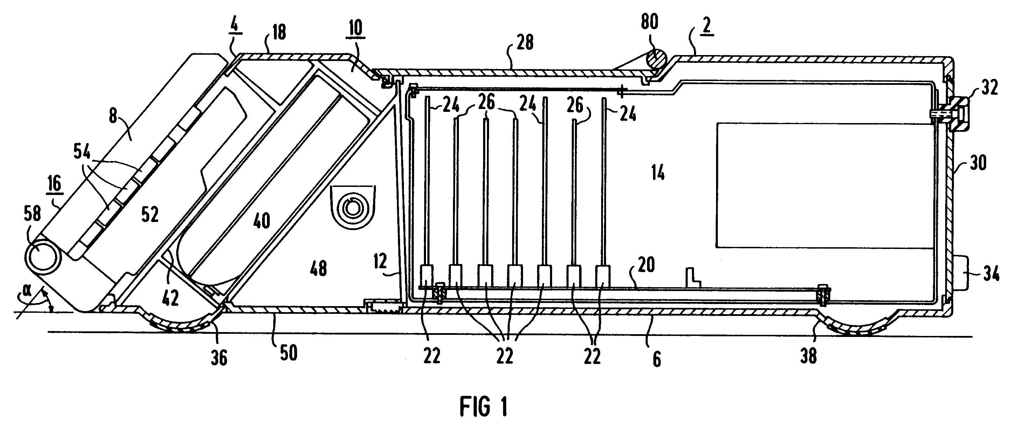

In Figur 1 ist ein Längsschnitt eines elektronischen Gerätes schematisch dargestellt, das in ein transportables Gehäuse 2 eingebaut ist. Eine Stirnfläche 4 des Gehäuses 2 ist derart geneigt, daß diese Stirnfläche 4 mit der Bodenfläche 6 einen spitzen Winkel α einschließt. Der Winkelwert dieses spitzen Winkels α hängt von der Breite einer verwendeten, abnehmbaren Tastaturkonsole 8 ab. Durch die geneigte Stirnfläche 4 ist ein Stauraum 10 entstanden, der durch eine Trennwand 12 begrenzt wird. Diese Trennwand 12 unterteilt das Gehäuse 2 in einen die Elektronik aufnehmenden Gehäuseteil 14 und einen eine Bearbeitungseinheit 16 aufnehmenden Gehäuseteil 18.

Das Gehäuseteil 14 enthält eine waagrechte Zentralbaugruppe 20 mit sieben Steckplätzen 22. Auf der Zentralbaugruppe 20 ist ein Prozessor und/oder ein Arithmetikprozessor und ein Arbeitsspeicher untergebracht, wobei auch Platz für die Erweiterung des Arbeitsspeichers vorhanden ist. In den Steckplätzen 22 sind drei kurze Steckbaugruppen 24 und vier lange Steckbaugruppen 26 senkrecht gesteckt. Außerdem enthält dieser Gehäuseteil 14 ein Diskettenlaufwerk sowie ein Festplattenlaufwerk, die aus Übersichtlichkeitsgründen nicht dargestellt sind. Die Laufwerke sind unter dem Aspekt der Industrietauglichkeit, insbesondere Schock- und Rüttelfestigkeit in allen Betriebslagen, ausgewählt. Ferner sind im Gehäuseteil 14 unterschiedliche Schnittstellen untergebracht, die ebenfalls aus Übersichtlichkeitsgründen nicht näher dargestellt sind. Die im Gehäuseteil 14 installierte Elektronik entspricht im wesentlichen der Elektronik des im Handel erhältlichen Programmiergerätes PG 750 ("Energie und Automation", 11, 1989, Heft 2, Seiten 22 bis 24 bzw. Sonderdruck "SIMATIC S5 PG 750 - Das Programmiergerät für alle SPS", Bestell-Nummer A19100-E812-B597). Das Gehäuseteil 14 verfügt über einen abnehmbaren Deckel 28, wodurch man eine nicht voll besetzte Zentralbaugruppe 20 nachträglich erweitern kann bzw. um Steckbaugruppen 24 oder 26 austauschen zu können. Eine Stirnfläche 30 des Gehäuseteils 14, die gleichzeitig eine Stirnfläche des Gehäuses 2 ist, ist mit vier Standfüßen versehen, von denen nur die Standfüße 32 und 34 dargestellt sind. Die Bodenfläche 6 ist an zwei Stellen wulstförmig ausgebildet, die als Standfüße 36 und 38 bei der Verwendung des elektronischen Gerätes als Tischgerät dienen.

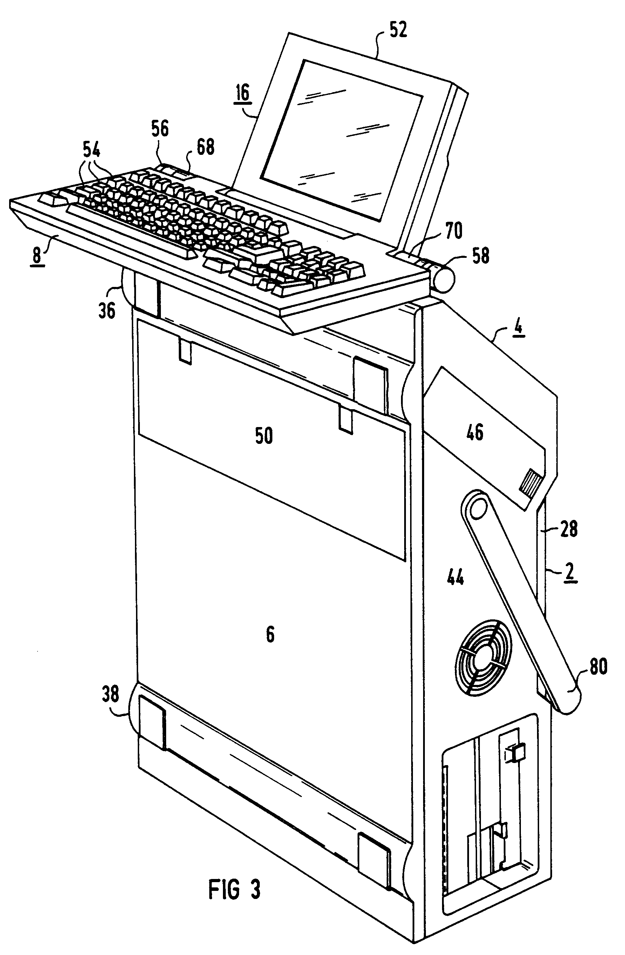

Im Stauraum 10 ist ein einen Drucker 40 aufnehmender, quaderförmiger Hohlkörper 42 angeordnet. Dieser Hohlkörper 42 ist von einer Seitenfläche 44 des Gehäuses 2 zugänglich und durch eine Abdeckung 46 abschließbar (Figur 3). Außerdem ist im Stauraum 10 ein Zubehörfach 48 angeordnet, das von der Bodenfläche 6 zugänglich ist. Auch dieses Zubehörfach 48 ist mittels einer Abdeckung 50 abschließbar (Figur 3). In diesem Zubehörfach 48 können Kabel für die Verbindung des Druckers 40 und für die Verbindung des Gerätes mit einer Steuerung einer Maschine oder einem Zentralrechner untergebracht werden.

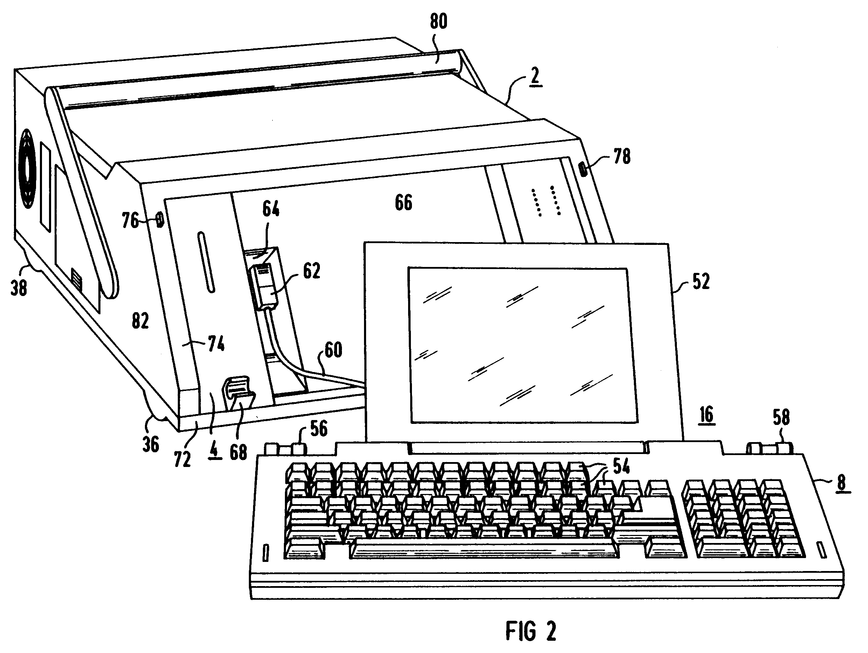

Die Bearbeitungseinheit 16 besteht aus einer abnehmbaren Tastaturkonsole 8 und einem Flachbildschirm 52. Als Tastaturkonsole 8 ist ein flaches Gehäuse vorgesehen, das Eingabetastaturen 54 für das elektronische Gerät aufweist. Als Flachbildschirm 52 ist beispielsweise ein Lumineszenz-Bildschirm vorgesehen. Dieser Flachbildschirm 52 ist schwenkbar und einrastbar mit der Tastaturkonsole 8 verbunden. Als schwenkbare Verbindung ist ein Gelenk, insbesondere ein Scharniergelenk vorgesehen, wobei die Tastaturkonsole 8 und der Flachbildschirm 52 jeweils als Teil des Gelenks ausgebildet sind. Der Flachbildschirm 52 ist als hohes Gelenkband-Profil als Innenhälfte und die Tastaturkonsole 8 ist als niedriges Gelenkband-Profil als Außenhälfte des gebildeten Gelenks ausgestaltet. Diese beiden Hälften sind mittels einer Welle miteinander verbunden und bilden dadurch das Scharniergelenk (Figur 2). Die Welle ragt an beiden Enden des Scharniergelenks heraus. Die beiden freien Wellenenden sind jeweils mit einer Arretierungsvorrichtung 56 und 58 versehen. Diese Arretierungsvorrichtung 56 und 58 ist axial verschiebbar und wird mittels einer Druckfeder in eine Ruhelage gedrückt.

In Figur 2 ist eine perspektivische Frontansicht des elektronischen Gerätes als Tischgerät dargestellt, wobei die Bearbeitungseinheit 16 räumlich vom Gerät getrennt ist. Die Bearbeitungseinheit 16 ist über ein Kabel 60, an dessen Ende ein Anschlußstecker 62 angebracht ist, mit dem Gerät verbunden, wobei der Anschlußstecker 62 in einen Anschlußschacht 64 gesteckt ist. Die Stirnfläche 4 des Gehäuses 2 ist derartig ausgebildet, daß beispielsweise mittig eine Vertiefung 66 mit dem Anschlußschacht 64 vorhanden ist. Außerdem ist die Stirnfläche 4 mit seitlich angeordneten gabelförmigen Vorrichtungen 68 und 70 versehen. Diese gabelförmigen Vorrichtungen 68 und 70 sind beidseitig der Vertiefung 66 im Bereich der von der geneigten Stirnfläche 4 und der Bodenfläche 6 gebildeten Stoßkante 72 senkrecht auf der geneigten Stirnfläche 4 angeordnet. Diese gabelförmigen Vorrichtungen 68 und 70 nehmen die Bearbeitungseinheit 16 auf. Mittels der Arretierungsvorrichtung 56 und 58 wird die Bearbeitungseinheit 16 schwenkbar mit den gabelförmigen Vorrichtungen 68 und 70 arretiert. Die Vertiefung 66 ist derartig ausgestaltet, daß der Flachbildschirm 52 darin aufgenommen werden kann. Außerdem enthält die Vertiefung 66 den Anschlußschacht 64. Ferner ist entlang der beiden Schmalkanten und der gegenüber der Stoßkante 72 angeordnete Längskante der geneigten Stirnfläche 4 ein Steg 74 angeordnet. Auf den beiden Stegteilen entlang der Schmalkanten der Stirnfläche 4 ist jeweils ein Teil 76 und 78 einer Arretierungsvorrichtung für die Tastaturkonsole 8 angeordnet. Der Steg 74 ist derart ausgestaltet, daß die Tastaturkonsole 8 sich nur auf diesen Steg 74 und nicht auf den Flachbildschirm 52 im geschlossenen Zustand des Gerätes abstützen kann. Die Teile 76 und 78 der Arretierungsvorrichtung für die Tastaturkonsole 8 verhindert ein Wegschwenken der Tastaturkonsole 8 während des Transportes des Gerätes. Zum Transport des elektronischen Gerätes dient ein Tragbügel 80, der beideseitig an den Seitenflächen 82 und 44 drehbar angeschlagen ist. Der Tragbügel 80 ist derart ausgebildet, daß er, wie in der Figur 2 dargestellt, auf dem abnehmbaren Deckel 28 oder, wenn das elektronische Gerät als Tischgerät benutzt wird, auch auf dem Tisch parallel zur Stoßkante 72 aufliegt.

In Figur 3 ist das elektronische Gerät als Standgerät perspektivisch dargestellt. Bei dieser Verwendungsart ist die Tastaturkonsole 8 waagrecht angeordnet und der Flachbildschirm 52 kann abhängig vom Benutzer so eingestellt werden, daß ein ergonomisch gestalteter Arbeitsplatz entsteht. Dabei stützt sich die Tastaturkonsole 8 jeweils auf die gabelförmige Vorrichtung 68 und 79 ab. Durch die rastbare Ausführung des Scharniergelenks zwischen der Tastaturkonsole 8 und dem Flachbildschirm 52 bleibt der Flachbildschirm 52 in der vom Benutzer gewünschten Stellung zur Tastaturkonsole 8 stehen.

Durch die Ausgestaltung der Bearbeitungseinheit 16 kann man das elektronische Gerät als Tischgerät und als Standgerät verwenden. Als Tischgerät kann die Bearbeitungseinheit 16 in den gabelförmigen Vorrichtungen 68 und 70 eingehängt bleiben, wenn genügend Platz auf dem Tisch vorhanden ist. Dabei kann der Flachbildschirm 52 jedoch abhängig vom Benutzer so eingestellt werden, daß ein ergonomisch gestalteter Arbeitsplatz entsteht. Ist jedoch auf dem Tisch kein Platz für das elektronische Gerät vorhanden, so kann das elektronische Gerät unter den Tisch gestellt werden und die Bearbeitungseinheit 16 kann frei auf dem Tisch räumlich getrennt vom elektronischen Gerät aufgestellt werden. Die räumliche Distanz vom Gerät und der Bearbeitungs einheit 16 wird nur durch die Länge des Kabels 60 begrenzt. Somit kann das Gerät orts- und anwendungsbedingt in vielen Lagen eingesetzt werden, wobei jeder Benutzer die Bearbeitungseinheit 16 so einstellen kann, daß jeweils ein ergonomisch gestalteter Bildschirmarbeitsplatz entsteht.

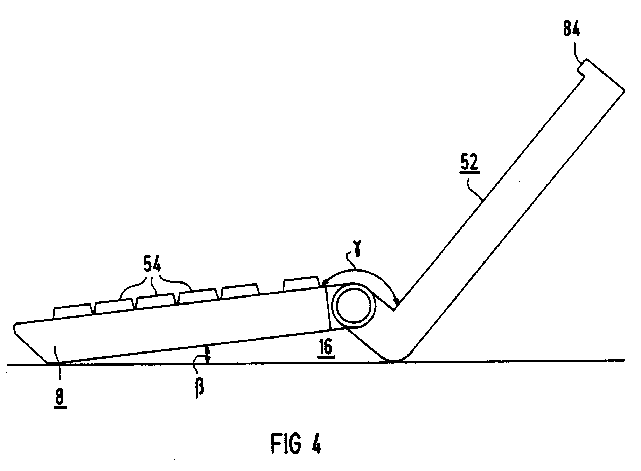

In Figur 4 ist eine Seitenansicht einer Ausführungsform der Bearbeitungseinheit 16 dargestellt. Die Bearbeitungseinheit 16 stützt sich auf eine vordere Kante der Tastaturkonsole 8 und auf eine hintere, untere abgerundete Kante des Flachbildschirms 52, das als hohes Gelenkband-Profil als Innenhälfte des Scharniergelenks ausgestaltet ist, ab. Dadurch gelangt die Tastaturkonsole 8 in eine geneigte Stellung. Der Neigungswinkel β der Tastaturkonsole 8 kann nun durch Schwenken des Flachbildschirms 52 verändert werden. Die beiden Extremlagen der Tastaturkonsole 8 werden genau dann erreicht, wenn der Flachbildschirm 52 mit der Tastaturkonsole 8 einen Winkel γ mit einem Wert γ = 90° und einem Wert γ = 180° einnimmt. Zwischen diesen beiden Lagen der Tastaturkonsole 8 kann man mittels Schwenken des Flachbildschirms 52 den Neigungswinkel β der Tastaturkonsole 8 stufenlos verstellen, so daß immer ein ergonomisch gestalteter Bildschirmarbeitsplatz entsteht. Bei dieser Ausgestaltung der Bearbeitungseinheit 16 ist der Flachbildschirm 52 mit einem Steg 84 versehen, so daß bei zusammengeklappter Bearbeitungseinheit 16 der Flachbildschirm 52 sich auf der Tastaturkonsole 8 abstützen kann. Durch diese Ausgestaltung der Bearbeitungseinheit 16 kann ein Servicemann die Bearbeitungseinheit 16 alleine zu Servicearbeiten bei Kunden mitnehmen, die das elektronische Gerät als externen Speicher einer Steuerung und/oder als Protokolliergerät einsetzen.

## Patentansprüche

1. Elektronisches Gerät in einem Gehäuse (2) mit einer abnehmbaren Tastaturkonsole (8), die über ein Kabel (60) mit dem Gerät verbindbar ist, **dadurch gekennzeichnet,** daß die Tastaturkonsole (8) mit einem schwenkbaren, einrastbaren Flachbildschirm (52) eine abnehmbare Bearbeitungseinheit (16) bildet, daß eine Stirnfläche (4) des Gehäuses (2) derart geneigt ist, daß diese Stirnfläche (4) mit der Bodenfläche (6) des Gehäuses (2) einen spitzen Winkel (α) einschließt, wodurch ein Stauraum (10) entsteht, daß diese geneigte Stirnfläche (4) mittig mit einer den Flachbildschirm (52) aufnehmenden Vertiefung (66), mit einem Anschlußschacht (64) zur Aufnahme des Anschlußsteckers (62) der abnehmbaren Bearbeitungseinheit (16) und mit zwei die Bearbeitungseinheit (16) aufnehmenden, gabelförmigen Vorrichtungen (68, 70) versehen ist und daß die Bearbeitungseinheit (16) mit einer zu den gabelförmigen Vorrichtungen (68, 70) korrespondierenden Arretierungsvorrichtung (56, 58) versehen ist.

2. Elektronisches Gerät nach Anspruch 1, **dadurch gekennzeichnet,** daß die gabelförmigen Vorrichtungen (68, 70) beidseitig der Vertiefung (66) im Bereich der von der geneigten Stirnfläche (4) und der Bodenfläche (6) gebildeten Stoßkante (72) senkrecht auf der geneigten Stirnfläche (4) angeordnet sind.

3. Gerät nach Anspruch 1, **dadurch gekennzeichnet,** daß als schwenkbare Ausführung von Tastaturkonsole (8) und Flachbildschirm (52) ein Scharniergelenk vorgesehen ist, wobei der Flachbildschirm (52) als hohes Gelenkband-Profil als Innenhälfte und die Tastaturkonsole (8) als niedriges Gelenkband-Profil als Außenhälfte dieses Scharniergelenks ausgestaltet sind.

4. Gerät nach Anspruch 3, **dadurch gekennzeichnet,** daß eine Welle des Scharniergelenks beidseitig über das Scharniergelenk herausragt und die freien Wellenenden jeweils mit einer Arretierungsvorrichtung (56, 58) versehen sind.

5. Gerät nach Anspruch 1, **dadurch gekennzeichnet,** daß als Flachbildschirm (52) ein Elektrolumineszenz-Bildschirm vorgesehen ist.

6. Gerät nach Anspruch 1, **dadurch gekennzeichnet,** daß im Stauraum (10) ein einen Drucker (40) aufnehmender, quaderförmiger Hohlkörper (42) angeordnet ist, der von einer Seitenfläche (44) des Gerätes zugänglich ist.

7. Gerät nach Anspruch 1, **dadurch gekennzeichnet,** daß im Stauraum (10) ein Zubehörfach (48) angeordnet ist, das von der Bodenfläche (6) des Gerätes zugänglich ist.

8. Gerät nach Anspruch 1, **dadurch gekennzeichnet,** daß entlang der beiden Schmalkanten und der gegenüber der Stoßkante (72) angeordneten Längskante der geneigten Stirnfläche (4) ein Steg (74) angeordnet ist.

9. Gerät nach Anspruch 8, **dadurch gekennzeichnet,** daß auf den beiden Stegteilen entlang der Schmalkanten jeweils ein Teil (76, 78) einer Arretierungsvorrichtung für die Tastaturkonsole (8) angeordnet ist.

## Claims

1. Electronic device in a housing (2) having a removable keyboard console (8) which can be connected with the device by way of a cable (60), characterised in that the keyboard console (8) forms, with a flat screen (52) which can be swivelled and engaged, a removable processing unit (16), in that a face (4) of the housing (2) is inclined in such a way that this face (4), with the base surface (6) of the housing (2), encloses an acute angle (α), whereby a stowage space (10) develops, in that this inclined face (4) is provided centrally with a recess (66) which receives the flat screen (52), with a connection shaft (64) for receiving the connection plug (62) of the removable processing unit (16), and with two fork-shaped arrangements (68, 70) which receive the processing unit (16), and in that the processing unit (16) is provided with a fixing arrangement (56, 58) which corresponds to the fork-shaped arrangements (68, 70).

2. Electronic device according to claim 1, characterised in that the fork-shaped arrangements (68, 70) are arranged on both sides of the recess (66) in the region of the impact edge (72), formed by the inclined face (4) and the base surface (6), so as to be perpendicular to the inclined face (4).

3. Device according to claim 1, characterised in that a hinge is provided as a swivelling embodiment of keyboard console (8) and flat screen (52), with the flat screen (52) being formed as a high hinged profile as an inner half and the keyboard console (8) being formed as a low hinged profile as an outer half of this hinge.

4. Device according to claim 3, characterised in that a shaft of the hinge projects out on both sides over the hinge and the free shaft ends are each provided with a fixing arrangement (56, 58).

5. Device according to claim 1, characterised in that an electroluminescent screen is provided as a flat screen (52).

6. Device according to claim 1, characterised in that arranged in the stowage space (10) there is a parallelepiped block-shaped hollow body (42) which receives a printer (40) and is accessible from a side face (44) of the device.

7. Device according to claim 1, characterised in that an accessories compartment (48), which is accessible from the base surface (6) of the device, is arranged in the stowage space (10).

8. Device according to claim 1, characterised in that a web (74) is arranged along the two narrow edges and the longitudinal edge of the inclined face (4) arranged opposite the impact edge (72).

9. Device according to claim 8, characterised in that arranged on the two portions of the web along the narrow edges there is a respective part (76, 78) of a fixing arrangement for the keyboard console (8).

## Revendications

1. Appareil électronique disposé dans un boîtier (2) et comportant une console amovible à clavier (8), qui peut être reliée à l'appareil par l'intermédiaire d'un câble (60), caractérisé par le fait que la console à clavier (8) forme, avec un écran plat pivotant et encliquetable (52), une unité de traitement amovible (16), qu'une surface frontale (4) du boîtier (2) est inclinée de telle sorte que cette surface frontale (4) fait un angle aigu (α) avec la surface (6) du fond du boîtier (2), ce qui fait apparaître un espace de logement (10), que cette surface frontale inclinée (4) comporte, dans sa partie médiane, un renfoncement (66) recevant l'écran plat (52), un logement de raccordement (64) servant à loger le connecteur de raccordement (62) de l'unité de traitement amovible (16), et deux dispositifs en forme de fourches (68, 70), qui reçoivent l'unité de traitement (16), et que l'unité de traitement (16) est équipée d'un dispositif de blocage (56, 58), qui correspond aux dispositifs en forme de fourches (68, 70).

2. Appareil électronique suivant la revendication 1, caractérisé par le fait que les dispositifs en forme de fourches (68, 70) sont disposés des deux côtés du renfoncement (66) dans la zone du bord d'aboutement (72), qui est formée par la surface frontale inclinée (4) et la surface de fond (6), perpendiculairement à la surface frontale inclinée (4).

3. Appareil électronique suivant la revendication 1, caractérisé par le fait qu'il est prévu, en tant que système pivotant de la console à clavier (8) et de l'écran plat (52), une articulation à charnière, l'écran plat (52) étant réalisé sous la forme d'un profilé supérieur de bande d'articulation en tant que moitié intérieure de cette articulation à charnière et que la console à clavier (8) est réalisée sous la forme d'un profilé inférieur de bande d'articulation en tant que moitié extérieure de cette articulation à charnière.

4. Appareil suivant la revendication 3, caractérisé par le fait qu'un arbre de l'articulation à charnière fait saillie des deux côtés au-delà de l'articulation à charnière et que les extrémités libres de l'arbre sont pourvues chacune d'un dispositif de blocage (56, 58).

5. Appareil suivant la revendication 1, caractérisé par le fait qu'il est prévu, comme écran plat (52), un écran électroluminescent.

6. Appareil suivant la revendication 1, caractérisé pr le fait que dans l'espace de rangement (10) est disposé un corps creux parallélépipédique (42), qui reçoit une imprimante (40) et qui est accessible à partir d'une face latérale (44) de l'appareil.

7. Appareil suivant la revendication 1, caractérisé par le fait qu'un casier à accessoires (48), qui est accessible à partir de la surface de fond (6) de l'appareil, est disposé dans l'espace de rangement (10).

8. Appareil suivant la revendication 1, caractérisé par le fait qu'une barrette (74) est disposée le long des deux arêtes courtes et de l'arête longitudinale, située en vis-à-vis de l'arête d'aboutement (72), de la surface frontale inclinée (4).

9. Appareil suivant la revendication 8, caractérisé par le fait que des parties respectives (76, 78) d'un dispositif de blocage pour la console à clavier (8) sont disposée sur les deux parties de la barrette, le long des arêtes courtes.
